# EUROPEAN PATENT APPLICATION

(11) **EP 4 365 066 A1**
(43) Date of publication of application: **08.05.2024**
(21) Application number: 22833622.8
(22) Date of filing: 29.06.2022
(51) Int. Cl.: B62D 25/02, B62D 21/15, B62D 29/00

(54) **SIDE SILL FOR VEHICLE**

(30) Priority: 29.06.2021 KR 20210084513; 28.06.2022 KR 20220078607
(71) Applicant: POSCO Co., Ltd, Pohang-si, Gyeongsangbuk-do 37859 (KR)
(72) Inventor: LEE, Gyu-Min, Incheon 21985 (KR); PARK, Jong-Cheol, Incheon 21985 (KR)
(74) Representative: Meissner Bolte Partnerschaft mbB
(86) International application number: PCT/KR2022/009305
(87) International publication number: WO 2023/277567

(57) **Abstract**

The present invention provides a side sill for vehicles, comprising: a side sill frame having a hollow portion; and a reinforcement frame disposed in the hollow portion and arranged in the longitudinal direction of the side sill frame, wherein: the reinforcement frame includes unit sections which are successive in the longitudinal direction of the side sill frame and have changing heights; and the upper and lower surfaces of the reinforcement frame are spaced apart from the side sill frame.

## Description

### [Technical Field]

The present disclosure relates to a side sill for a vehicle.

### [Background Art]

It should be noted that the contents described in this section provide only background information of the present disclosure and do not constitute prior art.

Side sills for vehicles protect passengers by absorbing collision energy in the event of a side collision.

Side sills, applied to eco-friendly vehicles, such as electric vehicles, play a role in protecting not only passengers but also batteries located on the floor. Since batteries have a relatively large volume compared to other components of vehicles, a side space of vehicles equipped with batteries is relatively narrow, compared to vehicles equipped with an internal combustion engine.

Therefore, side sills applied to eco-friendly vehicles should be able to absorb maximum collision energy within the narrow space and have a minimum weight to improve energy efficiency of eco-friendly vehicles.

To this end, aluminum extruded materials have been applied to the side sills of eco-friendly vehicles, but there is continuing demand for improved collision energy absorption ability and weight reduction.

(Patent Document 1) KR 20-1998-0043143 U (1998.09.25)

### [Disclosure]

### [Technical Problem]

An aspect of the present disclosure is to improve collision energy absorption efficiency and achieve a weight reduction of a side sill.

Another aspect of the present disclosure is to increase rigidity of a side sill and reduce manufacturing costs.

### [Technical Solution]

According to an aspect of the present disclosure, a side sill for a vehicle may include: a side sill frame including a hollow portion; and a reinforcing frame disposed in the hollow portion in a longitudinal direction of the side sill frame, wherein the reinforcing frame has a unit section continued in the longitudinal direction of the side sill frame and having changing heights, and has upper and lower surfaces spaced apart from the side sill frame.

The unit section may include: a first plane portion disposed to be parallel to the longitudinal direction of the side sill frame; an inclined portion connected to the first plane portion and inclinedly disposed; and a second plane portion connected to the inclined portion and provided in a position lower than the first plane portion.

The inclined portion may include: a first inclined portion continued from the first plane portion to the second plane portion and disposed to be inclined downwardly; and a second inclined portion continued from the second plane portion to the first plane portion and disposed to be inclined upwardly.

The side sill frame may include: a first side sill frame to which one side of the reinforcing frame is bonded; and a second side sill frame to which the other side of the reinforcing frame is bonded, and bonded to the first side sill frame, wherein the first plane portion and the second plane portion are disposed to face a junction of the first side sill frame and the second side sill frame.

At least one of the first plane portion and the second plane portion may include an uneven portion.

A length of the first plane portion and the second plane portion in the longitudinal direction of the side sill frame may be any one value of 40 mm or more and 70 mm or less.

An angle formed by an extension line of the first plane portion and the inclined portion and an angle formed by the extension line of the second plane portion and the inclined portion may be any one value of 45° or more and 75° or less.

The unit section may include: a third plane portion disposed to be parallel to the longitudinal direction of the side sill frame; a third inclined portion connected to the third plane portion and disposed to be inclined upwardly; and a fourth inclined portion connected to the third inclined portion and disposed to be inclined downwardly.

The unit section may include: a fourth plane portion disposed to be parallel to the longitudinal direction of the side sill frame; a fifth inclined portion connected to the fourth plane portion and disposed to be inclined downwardly; and a sixth inclined portion connected to the fifth inclined portion and disposed to be inclined upwardly.

The unit section may include: a seventh inclined portion disposed to be inclined upwardly; and an eighth inclined portion connected to the seventh inclined portion and disposed to be inclined downwardly.

The seventh inclined portion and the eighth inclined portion may have a flat plate shape.

The seventh inclined portion and the eighth inclined portion may have a curved plate shape.

The unit section may include: a first unit section disposed in an upper portion of the side sill frame in a height direction; and a second unit section disposed below the first unit section, wherein the first unit section may include: a fifth plane portion disposed to be parallel to the longitudinal direction of the side sill frame; a ninth inclined portion connected to the fifth plane portion and disposed to be inclined upwardly; and a tenth inclined portion connected to the ninth inclined portion and disposed to be inclined downwardly, and the second unit section may include: a sixth plane portion disposed to be parallel to the longitudinal direction of the side sill frame; an eleventh inclined portion connected to the sixth plane portion and disposed to be inclined downwardly; and a twelfth inclined portion connected to the eleventh inclined portion and disposed to be inclined upwardly.

The fifth plane portion and the sixth plane portion may be disposed to be in contact with each other.

The unit section may include: a first unit section disposed in an upper portion in the height direction; and a second unit section disposed below the first unit section, wherein the first unit section may include: a seventh plane portion disposed to be parallel to the longitudinal direction of the side sill frame; a thirteenth inclined portion connected to the seventh plane portion and disposed to be inclined upwardly; an eighth plane portion connected to the thirteenth inclined portion and provided in a position lower than the seventh plane portion; and a fourteenth inclined portion connected to the eighth plane portion and disposed to be inclined downwardly, and the second unit section may include: a ninth plane portion disposed to be parallel to the longitudinal direction of the side sill frame; a fifteenth inclined portion connected to the ninth plane portion and disposed to be inclined downwardly; a tenth plane portion connected to the fifteenth inclined portion and provided in a position lower than the ninth plane portion; and a sixteenth inclined portion connected to the tenth plane portion and disposed to be inclined upwardly.

The seventh plane portion and the ninth plane portion may be disposed to be in contact with each other.

The unit section may include: a first unit section disposed in an upper portion of the side sill frame in a height direction; and a second unit section disposed below the first unit section, wherein the first unit section may include: a seventeenth inclined portion disposed to be inclined upwardly; and an eighteenth inclined portion connected to the seventeenth inclined portion and disposed to be inclined downwardly, and the second unit section may include: a nineteenth inclined portion disposed to be inclined downwardly; and a twentieth inclined portion connected to the nineteenth inclined portion and disposed to be inclined upwardly.

At least one of the side sill frame and the reinforcing frame may be formed of steel.

The reinforcing frame may be formed of single sheet steel.

A thickness of the reinforcing frame may be any one of 1.8 mm or more and 2.2 mm or less.

The reinforcing frame may have a tensile strength of 1180 MPa or more and a yield strength of any one value of 850 MPa or more and 1060 MPa or less.

### [Advantageous Effects]

According to the present disclosure, collision energy absorption efficiency of the side sill may be improved and the weight of the side sill may be reduced.

According to the present disclosure, the rigidity of the side sill may be increased and manufacturing costs may be reduced.

### [Description of Drawings]

FIG. 1 is a perspective view of a side sill for a vehicle according to a first exemplary embodiment in the present disclosure.
FIG. 2 is a cross-sectional view taken in a direction I-I' in FIG. 1.
FIG. 3 is a cross-sectional view of a reinforcing frame according to a second exemplary embodiment in the present disclosure.
FIG. 4 is a cross-sectional view of a typical side sill for a vehicle.
FIG. 5 is a load-displacement diagram of the side sill for a vehicle of FIG. 1 and the side sill for a vehicle of FIG. 4.
FIG. 6 is a cross-sectional view of a side sill for a vehicle according to a third exemplary embodiment in the present disclosure taken in the direction of I-I' in FIG. 1.
FIG. 7 is a cross-sectional view of a side sill for a vehicle according to a fourth exemplary embodiment in the present disclosure taken in the direction I-I' in FIG. 1.
FIG. 8 is a cross-sectional view of a side sill for a vehicle according to a fifth exemplary embodiment in the present disclosure taken in the direction of I-I' in FIG. 1.
FIG. 9 is a cross-sectional view of a side sill for a vehicle according to a sixth exemplary embodiment in the present disclosure taken in the direction of I-I' in FIG. 1.
FIG. 10 is a cross-sectional view of a side sill for a vehicle according to a seventh exemplary embodiment in the present disclosure taken in the direction of I-I' in FIG. 1.
FIG. 11 is a cross-sectional view of a side sill for a vehicle according to an eighth exemplary embodiment in the present disclosure taken in the direction of I-I' in FIG. 1.
FIG. 12 is a cross-sectional view of a side sill for a vehicle according to a ninth exemplary embodiment in the present disclosure taken in the direction of I-I' in FIG. 1.
FIG. 13 is a cross-sectional view of a side sill for a vehicle according to a tenth exemplary embodiment in the present disclosure taken in the direction of I-I' in FIG. 1.

### [Best Mode for Invention]

Components described with the same reference numerals in the accompanying drawings to help understanding of the description of the exemplary embodiments in the present disclosure are the same elements, and related components among the components having the same operation in each exemplary embodiment are denoted by the same or extended numbers.

In addition, in order to clarify the gist of the present disclosure, descriptions of well-known components and techniques by the prior art will be omitted, and hereinafter, the present disclosure will be described in detail with reference to the accompanying drawings.

However, the spirit of the present disclosure is not limited to the presented exemplary embodiments and may be suggested in other forms in which specific components are added, changed, or deleted by those skilled in the art, but this is also included within the scope of the same spirit as the present disclosure.

Hereinafter, the X-axis shown in the accompanying drawings is a width direction of a side sill, the Y-axis is a length direction of the side sill, and a Z-axis is a height direction of the side sill.

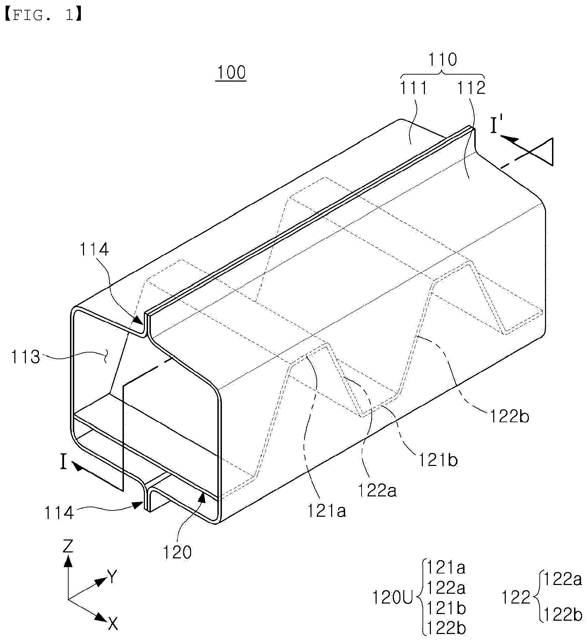

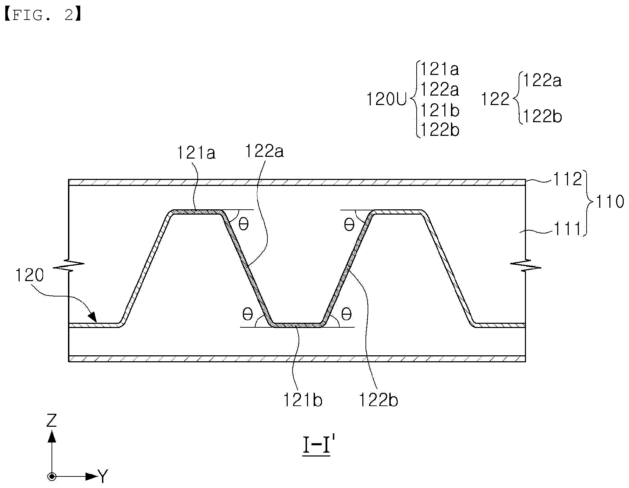

FIG. 1 is a perspective view of a side sill for a vehicle according to a first exemplary embodiment in the present disclosure, and FIG. 2 is a cross-sectional view taken in a direction I-I' in FIG. 1.

As shown in FIG. 1, the side sill 100 for a vehicle according to the first exemplary embodiment in the present disclosure may include a side sill frame 110 having a hollow portion 113 and a reinforcing frame 120 located in the hollow portion 113.

Both sides of the reinforcing frame 120 may be coupled to the side sill frame 110, and may continuously exist in a certain section of the hollow portion 113 of the side sill frame 110 in the Y-axis direction.

The reinforcing frame 120 may have a unit section continued in a longitudinal direction of the side sill frame 110 and have a unit section having changing heights, and upper and lower surfaces of the reinforcing frame 120 may be spaced apart from the side sill frame 110. This is to achieve both improved collision energy absorption efficiency and weight reduction.

Specifically, the reinforcing frame (120 in FIG. 1) may be spaced apart from each of the upper and lower surfaces of a first side sill frame (111 in FIG. 1) and upper and lower surfaces of a second side sill frame (112 in FIG. 1).

According to such a reinforcing frame, when an impact is applied to the side sill frame (110 in FIG. 1) in the X-axis direction (X in FIG. 1), collision energy absorption capability may be improved.

By disposing the reinforcing frame 120 to be spaced apart from each of the upper and lower surfaces of the side sill frame 110, the reinforcing frame 120 may be disposed in the center region in the Z-axis direction to realize a maximum deformation load when an impact is applied in the X-axis direction, and thus, there is an effect of improving collision energy absorption efficiency, while achieving a maximum weight reduction of the vehicle.

The reinforcing frame 120 may be provided in a zigzag shape in the Y-axis direction in the hollow portion 113.

In the first exemplary embodiment in the present disclosure, the side sill frame may include a first side sill frame to which one side of the reinforcing frame 120 is bonded and a second side sill frame to which the other side of the reinforcing frame is bonded.

The first side sill frame and the second side sill frame may be bonded to each other to form a junction 114.

FIG. 2 illustrates a cross-sectional shape of the side sill frame of the reinforcing frame (120 in FIG. 1) according to the first exemplary embodiment in the present disclosure in the longitudinal direction, that is, in the Y-axis direction.

The cross-sectional shape of the reinforcing frame may include a first plane portion 121a disposed to be parallel to the longitudinal direction of the side sill frame, an inclined portion 122 connected to the first plane portion 121a and inclinedly disposed, and a second plane portion 121b connected to the inclined portion 122.

The second plane portion 121b may be provided in a position lower than that of the first plane portion 121a in the Z-axis direction.

The first plane portion 121a and the second plane portion 121b may be provided in the hollow portion (113 in FIG. 1) to face the first side sill frame (111 in FIG. 1) and the second side sill frame (112 in FIG. 1). Here, the meaning of facing means that the first plane portion 121a and the second plane portion 121b are disposed to face the junction 114.

The first plane portion 121a may be disposed to face the junction (114 in FIG. 1) of the first side sill frame (111 in FIG. 1) and the second side sill frame (112 in FIG. 1) disposed in an upper portion. The second plane portion 121b may be disposed to face the junction (114 in FIG. 1) of the first side sill frame (111 in FIG. 1) and the second side sill frame (112 in FIG. 2) disposed in a lower portion.

The junction 114 and the first plane portion 121a disposed on an upper side may be spaced apart from each other and face each other, and the junction 114 and the second plane portion 121b disposed on a lower side may be spaced apart from each other and face each other.

The first plane portion 121a and the second plane portion 121b may be disposed to be parallel to the Y-axis direction, and the inclined portion 122 may connect the first plane portion 121a and the second plane portion 121b.

The inclined portion 122 may include a first inclined portion 122a and a second inclined portion 122b. The first inclined portion 122a may be continued from the first plane portion 121a to the second plane portion 121b and may be disposed to be inclined downwardly, and the second inclined portion 122b may be continued from the second plane portion 121b to the first plane portion 121a and may be disposed to be inclined upwardly.

The first plane portion 121a, the second plane portion 121b, and the inclined portion 122 may continuously exist in the Y-axis direction in the hollow portion (113 in FIG. 1) . The unit section may include a first plane portion 121a, a first inclined portion 122a, a second plane portion 121b, and a second inclined portion 122b. A plurality of unit intervals may be repeated in the Y-axis direction.

According to an exemplary embodiment in the present disclosure, the first plane portion 121a and the second plane portion 121b may have the same length in the Y-axis direction.

Further, according to the first exemplary embodiment in the present disclosure, the lengths of the first plane portion 121a and the second plane portion 121b in the Y-axis direction may be any one of 40 mm or more and 70 mm or less.

If the length of the first plane portion 121a and the second plane portion 121b in the Y-axis direction is less than 40 mm, the period of the repeating pattern of the unit section of the reinforcing frame 120 may be shortened, so the amount of material in use may increase to increase a weight, thereby adversely affecting a weight reduction.

If the lengths of the first plane portion 121a and the second plane portion 121b in the Y-axis direction exceeds 70 mm, a decrease in resistance to deformation of the first plane portion 121a and the second plane portion 121b may occur and the period of the repeating pattern of the unit section of the reinforcing frame 120 may be lengthened to reduce a resistance portion resisting deformation, thereby degrading performance of the collision energy absorption efficiency.

In addition, according to the first exemplary embodiment in the present disclosure, an angle formed by an extension line of the second plane portion 121b and the inclined portion 122 may be any one value of 45° or more and 75° or less.

This may be equally applied to the first plane portion 121a, and an angle θ formed between an extension line of the first plane portion 121a and the inclined portion 122 is any one of 45° or more and 75° or less.

If the angle θ formed by the extension line of the second plane portion 121b and the inclined portion 122 is less than 45°, the period of the repeating pattern of the unit section of the reinforcing frame 120 may be lengthened to reduce a resistance portion resisting deformation, thereby degrading performance of the collision energy absorption efficiency. Even when the angle θ formed between the extension line of the first plane portion 121a and the inclined portion 122 is less than 45°, degradation of performance of the collision energy absorption efficiency may also occur.

When the angle θ formed by an extension line of the second plane portion 121b and the inclined portion 122 exceeds 75°, the period of the repeating pattern of the unit section of the reinforcing frame 120 may be shortened, thereby increasing the amount of material in use to adversely affect a weight reduction. Even when the angle θ between an extension line of the first plane portion 121a and the inclined portion 122 exceeds 75°, a weight reduction may also be adversely affected.

Meanwhile, the length of the inclined portion 122 in the Z-axis direction may be appropriately selected and applied depending on a sectional height of a seat cross member of a vehicle to which a side sill for a vehicle will be applied later and a mounting structure of a battery.

According to the present disclosure, it is possible to maximize the collision energy absorption capacity compared to the weight of the reinforcing frame.

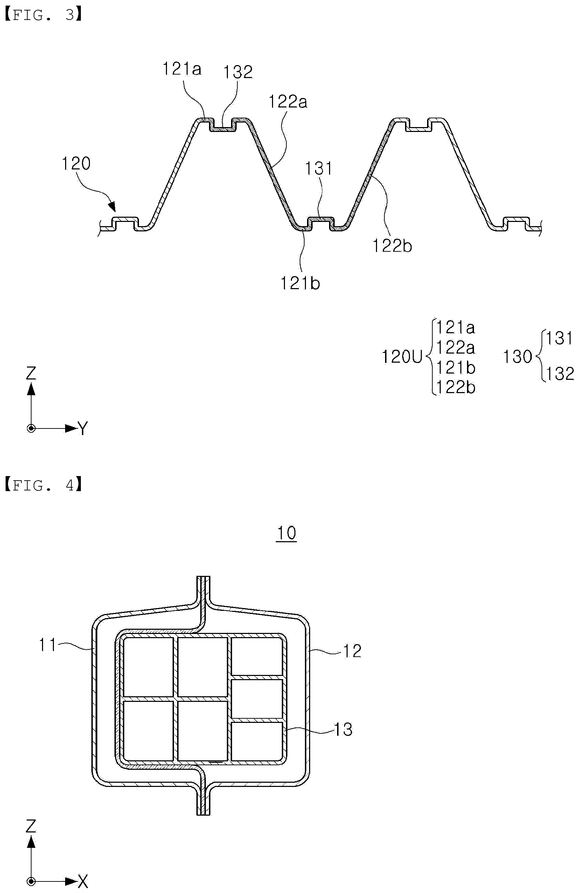

FIG. 3 illustrates a cross-section of the reinforcing frame (120 in FIG. 1) according to a second exemplary embodiment in the present disclosure. As shown in FIG. 3, at least one of the first plane portion 121a and the second plane portion 121b of the reinforcing frame according to another exemplary embodiment in the present disclosure may include an uneven portion 130.

The uneven portion 130 may include a protruding portion 131 protruding in a direction in which the Z-axis increases, and a concave portion 132 formed concavely in the direction in which the Z-axis increases.

The protruding portion 131 may be formed on the second plane portion 121b, and the concave portion 132 may be formed on the first plane portion 121a. However, this is not necessarily limited by the present disclosure, and the protruding portion 131 may be formed on the first plane portion 121a, and the concave portion 132 may be formed on the second plane portion 121b. In addition, both the protruding portion and the concave portion may be provided in the first plane portion 121a and the second plane portion 121b.

The protruding portion 131 and the concave portion 132 may further increase rigidity of the reinforcing frame (120 in FIG. 1) .

The protruding portion 131 and the concave portion 132 may be formed by bending and forming the reinforcing frame (120 in FIG. 1).

According to the protruding portion 131 and the concave portion 132, the rigidity of the reinforcing frame may increase without increasing the weight of the reinforcing frame (120 in FIG. 1) .

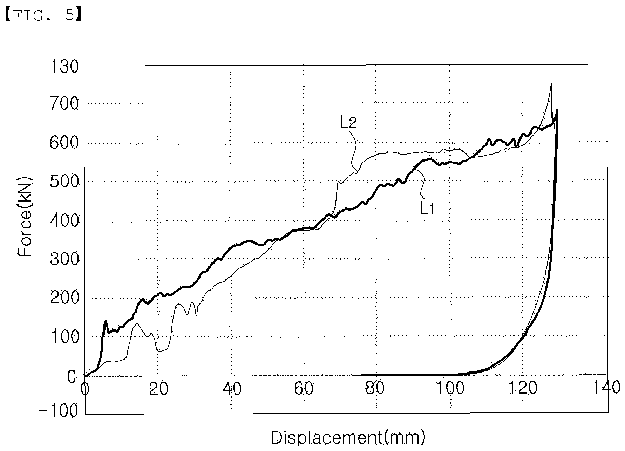

Meanwhile, FIG. 4 illustrates a cross-section of a typical side sill 10 for a vehicle, and FIG. 5 illustrates a load-displacement diagram of the side sill (10 in FIG. 4) for a vehicle of FIG. 4 and the side sill (100 in FIG. 1) for a vehicle of FIG. 1.

In FIG. 5, a length of the first plane portion (121a in FIG. 2) of the reinforcing frame (120 in FIG. 1) of the side sill (100 in FIG. 1) for a vehicle according to the present disclosure was applied as 50 mm, a length of the second plane portion (121b in FIG. 2) was applied as 50 mm, the angle θ formed by the extension line of the second plane portion (121b in FIG. 2) and the inclined portion (122 in FIG. 2) and the angle θ formed by the extension line of the first plane portion (121a in FIG. 2) and the inclined portion (122 in FIG. 2) were applied as 51.2°, and the thickness of the reinforcing frame (120 in FIG. 1) was applied as 2.0 mm.

In FIG. 5, the load-displacement value of the side sill (100 in FIG. 1) for a vehicle according to the present disclosure shown in FIG. 1 is shown as a first value L1, and the load-displacement value of the side sill (10 in FIG. 4) for a vehicle shown in FIG. 4 is shown as a second value L2.

Referring to the first value L1 and the second value L2, it can be seen that displacement in the same load of the side sill (100 in FIG. 1) for a vehicle shown in FIG. 1 is relatively small compared to the general side sill (10 in FIG. 4) for a vehicle shown in FIG. 4.

In addition, referring to that the cross-sectional structure of the side sill (100 in FIG. 1) for a vehicle according to the present disclosure is simpler than that of the general side sill (10 in FIG. 4) for a vehicle and the number of components of the side sill (100 in FIG. 1) for a vehicle according to the present disclosure is smaller than the number of components of the general side sill (10 in FIG. 4) for a vehicle, it can be seen that the vehicle side sill of the present invention has significantly improved impact energy absorption capacity compared to the general vehicle side sills.

In addition, according to test results, when a weight of the side sill frame (110 in FIG. 1) of the side sill (100 in FIG. 1) for a vehicle according to the present disclosure is 15.8 Kg, a collision energy absorption capacity per unit weight (internal energy ratio (KJ/kg) per 1 kg) thereof is 82.9%, and when a weight of the side sill frame (11 and 12 in FIG. 4) of the general side sill (10 in FIG. 4) for a vehicle is 22.1 Kg, a collision energy absorption capacity per unit weight (internal energy ratio (KJ/kg) per 1 kg) thereof is 61.7%, and therefore, it can be seen that the side sill for a vehicle according to the present disclosure is lighter than a side sill for the general vehicle and has a significantly higher collision energy absorption capacity.

According to the present disclosure as described above, the collision energy absorption capability may be improved, while the weight of the side sill for a vehicle is reduced.

In addition, it is possible to realize maximum collision energy absorption capacity with a minimum number of reinforcing frames and a minimum weight of the reinforcing frames by arranging the reinforcing frames in an optimal position inside the side sill frame.

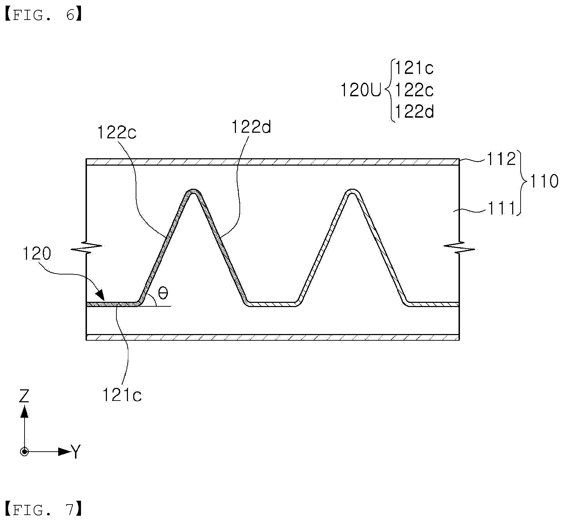

Hereinafter, a side sill for a vehicle according to third to tenth exemplary embodiments in the present disclosure will be described with reference to FIGS. 6 to 13.

Here, in the side sill for a vehicles according to the third to tenth exemplary embodiments in the present disclosure, only a configuration of the reinforcing frame is partially different, and the remaining components may be the same as those of the side sill for a vehicle of the first exemplary embodiment (refer to FIGS. 1 and 2).

Accordingly, various exemplary embodiments of components, such as the side sill frame included in the side sill for a vehicle described above may be applied to the third to tenth exemplary embodiments in the present disclosure.

FIG. 6 is a cross-sectional view of a side sill for a vehicle according to a third exemplary embodiment in the present disclosure taken in the direction of I-I' in FIG. 1.

A unit section 120U of the third exemplary embodiment in the present disclosure may include a third plane portion 121c, a third inclined portion 122c, and a fourth inclined portion 122d. A plurality of unit sections 120U may be repeated in the Y-axis direction. The third plane portion 121c, the third inclined portion 122c, and the fourth inclined portion 122d may continuously exist in the Y-axis direction in the hollow portion 113.

The third plane portion 121c may be disposed to be parallel to the longitudinal direction of the side sill frame 110. The third inclined portion 122c may continue from the third plane portion 121c and may be disposed to be inclined upwardly. The fourth inclined portion 122d may continue from the third inclined portion 122c and may be disposed to be inclined downwardly. For example, the third inclined portion 122c and the fourth inclined portion 122d may have the same length.

The length of the third plane portion 121c in the Y-axis direction may be any one value of 40 mm or more and 70 mm or less. Effects according to this may be the same as those previously described in the first exemplary embodiment in the present disclosure.

An angle θ formed by an extension line of the third plane portion 121c and the third inclined portion 122c may be any one value of 45° or more and 75° or less. An angle θ formed by an extension line of the third plane portion 121c and the fourth inclined portion 122d may be any one value of 45° or more and 75° or less. Effects according to this may be the same as those previously described in the first exemplary embodiment in the present disclosure.

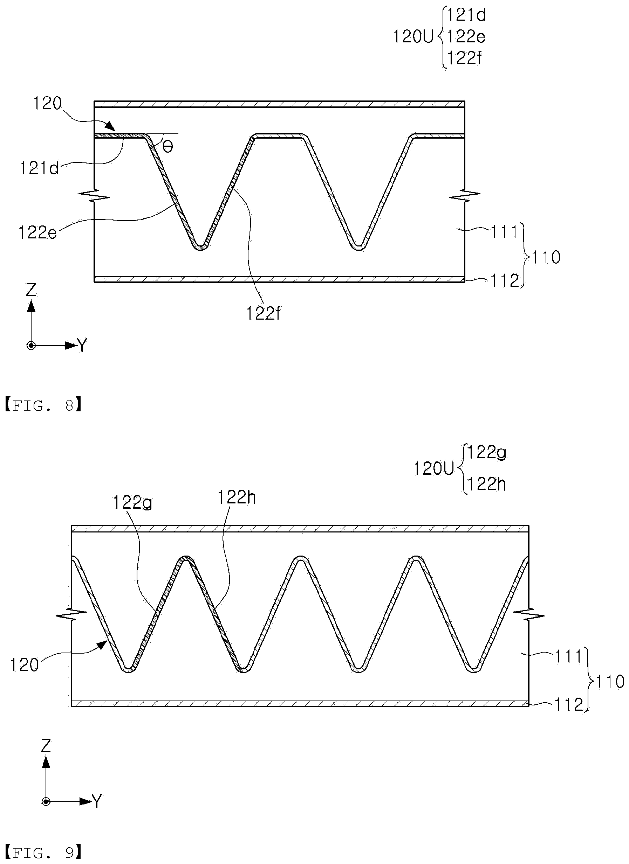

FIG. 7 is a cross-sectional view of a side sill for a vehicle according to a fourth exemplary embodiment in the present disclosure taken in the direction I-I' in FIG. 1.

The unit section 120U of the fourth exemplary embodiment in the present disclosure may include a fourth plane portion 121d, a fifth inclined portion 122e, and a sixth inclined portion 122f. A plurality of unit sections 120U may be repeated in the Y-axis direction. The fourth plane portion 121d, the fifth inclined portion 122e, and the sixth inclined portion 122f may continuously exist in the Y-axis direction in the hollow portion 113.

The fourth plane portion 121d may be disposed to be parallel to the longitudinal direction of the side sill frame 110. The fifth inclined portion 122e may continue from the fourth plane portion 121d and may be disposed to be inclined downwardly. The sixth inclined portion 122f may continue from the fifth inclined portion 122e and may be disposed to be inclined upwardly.

A length of the fourth plane portion 121d in the Y-axis direction may be any one value of 40 mm or more and 70 mm or less. Effects according to this may be the same as those previously described in the first exemplary embodiment in the present disclosure.

An angle θ formed by an extension line of the third plane portion 121c and the fifth inclined portion 122e may be any one value of 45° or more and 75° or less. An angle θ formed by the extension line of the fourth plane portion 121d and the sixth inclined portion 122f may be any one value of 45° or more and 75° or less. Effects according to this may be the same as those previously described in the first exemplary embodiment in the present disclosure.

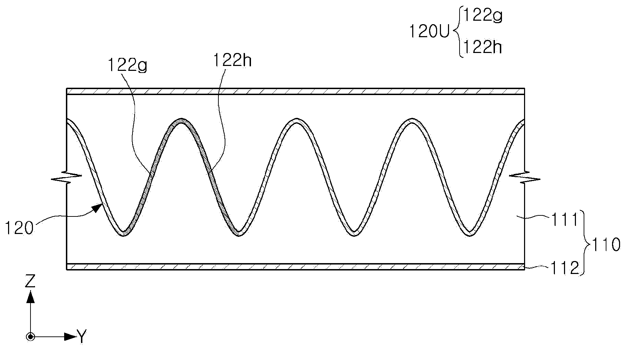

FIG. 8 is a cross-sectional view of a side sill for a vehicle according to the fifth exemplary embodiment in the present disclosure taken in the direction of I-I' in FIG. 1, and FIG. 9 is a cross-sectional view of a side sill for a vehicle according to the sixth exemplary embodiment in the present disclosure taken in the direction of I-I' in FIG. 1.

The unit section 120U of the fifth and sixth exemplary embodiments in the present disclosure may include a seventh inclined portion 122g and an eighth inclined portion 122h. The seventh inclined portion 122g may be disposed to be inclined upwardly. The eighth inclined portion 122h may continue from the seventh inclined portion 122g and may be disposed to be inclined downwardly. For example, the seventh inclined portion 122g and the eighth inclined portion 122h may have the same length.

Referring to FIG. 8, the seventh inclined portion 122g and the eighth inclined portion 122h may have a flat plate shape .

Referring to FIG. 9, the seventh inclined portion 122g and the eighth inclined portion 122h may have a curved plate shape.

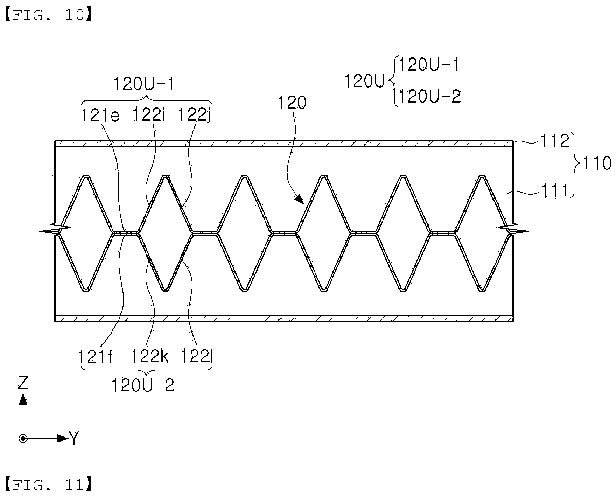

FIG. 10 is a cross-sectional view of a side sill for a vehicle according to a seventh exemplary embodiment in the present disclosure taken in the direction of I-I' in FIG. 1.

The unit section 120U of the seventh exemplary embodiment in the present disclosure may include a first unit section 120U-1 and a second unit section 120U-2. The first unit section 120U-1 may be disposed in an upper portion of the side sill frame110 in the height direction, and the second unit section 120U-2 may be disposed below the first unit section 120U-1.

The first unit section 120U-1 may include a fifth plane portion 121e, a ninth inclined portion 122i, and a tenth inclined portion 122j.

The fifth plane portion 121e may be disposed to be parallel to the longitudinal direction of the side sill frame 110. The ninth inclined portion 122i may continue from the fifth plane portion 121e and may be disposed to be inclined upwardly. The tenth inclined portion 122j may continue from the ninth inclined portion 122i and may be disposed to be inclined downwardly. For example, the ninth inclined portion 122i and the tenth inclined portion 122j may have the same length.

The second unit section 120U-2 may include a sixth plane portion 121f, an eleventh inclined portion 122k, and a twelfth inclined portion 122l.

The sixth plane portion 121f may be disposed to be parallel to the longitudinal direction of the side sill frame 110. The eleventh inclined portion 122k may continue from the sixth plane portion 121f and may be disposed to be inclined downwardly. The twelfth inclined portion 122l may continue from the eleventh inclined portion 122k and may be disposed to be inclined upwardly. For example, the eleventh inclined portion 122k and the twelfth inclined portion 122l may have the same length.

The fifth plane portion 121e and the sixth plane portion 121f may be disposed to be in contact with each other. For example, the fifth plane portion 121e and the sixth plane portion 121f may be bonded to each other using an adhesive or a welding method.

When an impact is applied in the X-axis direction, deformation may occur in the first unit section 120U-1 and the second unit section 120U-2 of the reinforcing frame 120. At this time, since the fifth plane portion 121e of the first unit section 120U-1 and the sixth plane portion 121f of the second unit section 120U-2 may be disposed to be in contact with each other, the first unit section 120U-1 and the second unit section 120U-2 may counterbalance deformation each other, so the collision energy absorption efficiency of the side sill for a vehicle may be improved.

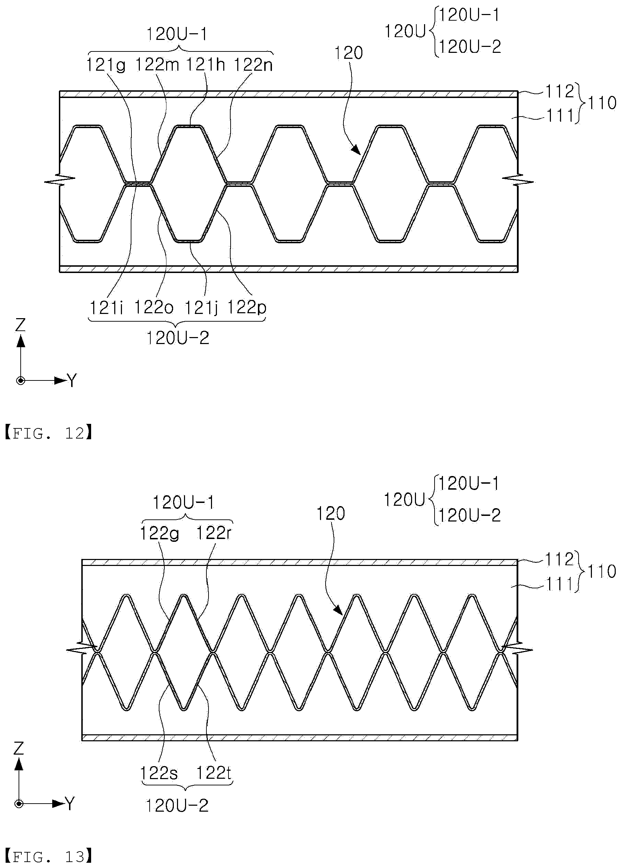

FIG. 11 is a cross-sectional view of a side sill for a vehicle according to the eighth exemplary embodiment in the present disclosure taken in the direction of I-I' in FIG. 1.

The unit section 120U of the eighth exemplary embodiment in the present disclosure may include a first unit section 120U-1 and a second unit section 120U-2. The first unit section 120U-1 may be disposed in an upper portion of the side sill frame110 in the height direction, and the second unit section 120U-2 may be disposed below the first unit section 120U-1.

The first unit section 120U-1 may include a seventh plane portion 121g, a thirteenth inclined portion 122m, an eighth plane portion 121h, and a fourteenth inclined portion 122n.

The seventh plane portion 121g may be disposed to be parallel to the longitudinal direction of the side sill frame 110. The thirteenth inclined portion 122m may be connected to the seventh plane portion 121g and may be disposed to be inclined upwardly. The eighth plane portion 121h may be connected to the thirteenth inclined portion 122m and may be provided in a position lower than that of the seventh plane portion 121g. The fourteenth inclined portion 122n may be connected to the eighth plane portion 121h and may be disposed to be inclined downwardly.

The seventh plane portion 121g and the eighth plane portion 121h may be disposed to be parallel to the Y-axis direction, and the seventh plane portion 121g may be provided in a position lower than that of the eighth plane portion 121h in the Z-axis direction.

The second unit section 120U-2 may include a ninth plane portion 121i, a fifteenth inclined portion 122o, a tenth plane portion 121j, and a sixteenth inclined portion 122p.

The ninth plane portion 121i may be disposed to be parallel to the longitudinal direction of the side sill frame 110. The fifteenth inclined portion 122o may be connected to the ninth plane portion 121i and may be disposed to be inclined downwardly. The tenth plane portion 121j may be connected to the fifteenth inclined portion 122o and may be provided in a position lower than that of the ninth plane portion 121i. The sixteenth inclined portion 122p may be connected to the tenth plane portion 121j and may be disposed to be inclined upwardly.

The ninth plane portion 121i and the tenth plane portion 121j may be disposed to be parallel to the Y-axis direction, and the tenth plane portion 121j may be located in a position lower than that of the ninth plane portion 121i in the Z-axis direction.

The seventh plane portion 121g and the ninth plane portion 121i may be disposed to be in contact with each other. For example, the seventh plane portion 121g and the ninth plane portion 121i may be bonded to each other using an adhesive or a welding method.

When an impact is applied in the X-axis direction, deformation may occur in the first unit section 120U-1 and the second unit section 120U-2 of the reinforcing frame 120. At this time, since the seventh plane portion 121g of the first unit section 120U-1 and the ninth plane portion 121i of the second unit section 120U-2 are disposed to be in contact with each other, the first unit section 120U-1 and the second unit section 120U-2 may counterbalance deformation each other, so the collision energy absorption efficiency of the side sill for a vehicle may be improved.

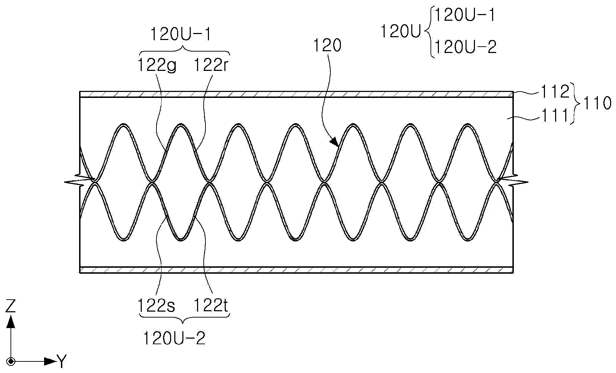

FIG. 12 is a cross-sectional view of a side sill for a vehicle according to a ninth exemplary embodiment in the present disclosure taken in the direction of I-I' in FIG. 1, and FIG. 13 is a cross-sectional view of a side sill for a vehicle according to a tenth exemplary embodiment in the present disclosure taken in the direction of I-I' in FIG. 1.

The unit section 120U of the ninth and tenth exemplary embodiments in the present disclosure may include a first unit section 120U-1 and a second unit section 120U-2. The first unit section 120U-1 may be disposed in an upper portion of the side sill frame110 in the height direction, and the second unit section 120U-2 may be disposed below the first unit section 120U-1.

The first unit section 120U-1 may include a seventeenth inclined portion 122q and an eighteenth inclined portion 122r. The seventeenth inclined portion 122q may be disposed to be inclined upwardly. The eighteenth inclined portion 122r may continue from the seventeenth inclined portion 122q and may be disposed to be inclined downwardly. For example, the seventeenth inclined portion 122q and the eighteenth inclined portion 122r may have the same length.

The second unit section 120U-2 may include a nineteenth inclined portion 122s and a twentieth inclined portion 122t. The nineteenth inclined portion 122s may be disposed to be inclined downwardly. The twentieth inclined portion 122t may continue from the nineteenth inclined portion 122s and may be disposed to be inclined upwardly. For example, the nineteenth inclined portion 122s and the twentieth inclined portion 122t may have the same length.

Referring to FIG. 12, the seventeenth inclined portion 122q, the eighteenth inclined portion 122r, the nineteenth inclined portion 122s, and the twentieth inclined portion 122t may have a flat plate shape. Referring to FIG. 13, the seventeenth inclined portion 122q, the eighteenth inclined portion 122r, the nineteenth inclined portion 122s, and the twentieth inclined portion 122t may have a curved plate shape.

A lower intersection point at which the seventeenth inclined portion 122q and the eighteenth inclined portion 122r of the first unit section 120U-1 intersect with each other and an upper intersection point at which the nineteenth inclined portion 122s and the twentieth inclined portion 122t of the second unit section 120U-2 intersect with each other may be disposed to be in contact with each other. The lower intersection point of the first unit section 120U-1 and the upper intersection point of the second unit section 120U-2 may be bonded to each other using an adhesive or welding method.

In the first to tenth exemplary embodiments in the present disclosure, at least one of the side sill frame 110 and the reinforcing frame 120 may be formed of steel. According to this, mechanical strength of the side sill for a vehicle may be improved. In addition, according to this, collision energy absorption capability may be further improved than that of a side sill for a vehicle (not shown) formed of aluminum of the same weight.

Therefore, it is possible to implement a side sill for a vehicle having improved collision energy absorption capability compared to the side sill for a vehicle formed of aluminum, while preventing an increase in the entire load of the vehicle compared to the side sill for a vehicle formed of aluminum.

In the first to tenth exemplary embodiments in the present disclosure, the thickness of the reinforcing frame 120 may be any one value of 1.8 mm or more and 2.2 mm or less.

If the thickness of the reinforcing frame 120 is less than 1.8 mm, the performance of collision energy absorption capability may be reduced due to a decrease in resistance to deformation of the reinforcing frame 120. If the thickness of the reinforcing frame 120 exceeds 2.2 mm, there is a problem in that the weight reduction effect may be reduced due to an increase in the weight of the reinforcing frame 120.

In the first to tenth exemplary embodiments in the present disclosure, the reinforcing frame 120 may be formed of a material including ultra-high strength steel having a tensile strength of 980 MPa or more.

In the first to tenth exemplary embodiments in the present disclosure, the reinforcing frame 120 may be formed of a material including 1180 TRIP steel.

In the first to tenth exemplary embodiments in the present disclosure, the first side sill frame 111 and the second side sill frame 112 may be formed of a material including 1470 MART steel.

In addition, in the first to tenth exemplary embodiments in the present disclosure, the reinforcing frame 120 may be formed by bending a single steel plate. According to this, mechanical strength of the reinforcing frame 120 may be further improved, and manufacturing cost may be reduced.

In addition, in the first to tenth exemplary embodiments in the present disclosure, the reinforcing frame 120 may have a tensile strength of 1180 MPa or more and a yield strength of 850 MPa or more and 1060 MPa or less.

As described above, when the side sill for a vehicle is formed of steel, the collision energy absorption capability thereof may be at least equal to or greater than that of a side sill for a vehicle formed of aluminum having the same weight.

Therefore, compared to when the side sill is produced from aluminum, it is possible to improve the collision energy absorption efficiency to the same level or higher, while reducing the weight of the side sill.

In the first to tenth exemplary embodiments in the present disclosure, one side of the reinforcing frame 120 may be arc-welded to the first side sill frame 111. In addition, the other side of the reinforcing frame 120 may be attached to the second side sill frame 112 by an adhesive. According to this, the convenience of manufacturing the side sill for a vehicle may be improved.

According to the side sill for a vehicle of the present disclosure as described above, when a load is applied in the X-axis direction, the side sill for a vehicle may be easily compressed and deformed in the X-axis direction, and shock absorption capacity may be improved. Therefore, it is possible to minimize transfer of shock to a space (not shown) in which a vehicle battery exists and a space in which an occupant exists .

The matters described above have been described in relation to an exemplary embodiment in the present disclosure, and it will be apparent to those of ordinary skilled in the art that the scope of the present disclosure is not limited thereto and may be variously modified and changed without departing from the technical spirit of the present disclosure described in the claims.

**[DESCRIPTION OF REFERENCE NUMERALS]**

| | | | |
|---|---|---|---|
| 110: | SIDE SILL FRAME | 111: | FIRST SIDE SILL FRAME |
| 112: | SECOND SIDE SILL FRAME | 113: | HOLLOW PORTION |
| 114: | JUNCTION | 120: | REINFORCING FRAME |
| 120U: | UNIT SECTION | 120U-1: | FIRST UNIT SECTION |
| 120U-2: | SECOND UNIT SECTION PORTION | 121A: | FIRST PLANE |
| 121B: | SECOND PLANE PORTION | 121C: | THIRD PLANE PORTION |
| 121D: | FOURTH PLANE PORTION | 121E: | FIFTH PLANE PORTION |
| 121F: | SIXTH PLANE PORTION | 121G: | SEVENTH PLANE PORTION |
| 121H: | EIGHTH PLANE PORTION | 121I: | NINTH PLANE PORTION |
| 121J: | TENTH PLANE PORTION | 122: | INCLINED PORTION |
| 122A: | FIRST INCLINED PORTION | 122B: | SECOND INCLINED PORTION |
| 122C: | THIRD INCLINED PORTION | 122D: | FOURTH INCLINED |

| PORTION | | | |
|---|---|---|---|
| 122E: | FIFTH INCLINED PORTION | 122F: | SIXTH INCLINED PORTION |
| 122G: | SEVENTH INCLINED PORTION | 122H: | EIGHTH INCLINED PORTION |
| 122I: | NINTH INCLINED PORTION INCLINED PORTION | 122J: | TENTH |
| 122K: | ELEVENTH INCLINED PORTION INCLINED PORTION | 122L: | TWELFTH |
| 122M: | THIRTEENTH INCLINED PORTION FOURTEENTH INCLINED PORTION | 122N: | |
| 122O: | FIFTEENTH INCLINED PORTION INCLINED PORTION | 122P: | SIXTEENTH |
| 122Q: | SEVENTEENTH INCLINED PORTION EIGHTEENTH INCLINED PORTION | 122R: | |
| 122S: | NINETEENTH INCLINED PORTION INCLINED PORTION | 122T: | TWENTIETH |
| 130: | UNEVEN PORTION | 131: | PROTRUDING PORTION |
| 132: | CONCAVE PORTION | | |

## Claims

1. A side sill for a vehicle, the side sill comprising;
a side sill frame including a hollow portion; and
a reinforcing frame disposed in the hollow portion in a longitudinal direction of the side sill frame,
wherein the reinforcing frame has a unit section continued in the longitudinal direction of the side sill frame and having changing heights, and has upper and lower surfaces spaced apart from the side sill frame.

2. The side sill of claim 1, wherein
the unit section includes:
a first plane portion disposed to be parallel to the longitudinal direction of the side sill frame;
an inclined portion connected to the first plane portion and inclinedly disposed; and
a second plane portion connected to the inclined portion and provided in a position lower than the first plane portion.

3. The side sill of claim 2, wherein
the inclined portion includes:
a first inclined portion continued from the first plane portion to the second plane portion and disposed to be inclined downwardly; and
a second inclined portion continued from the second plane portion to the first plane portion and disposed to be inclined upwardly.

4. The side sill of claim 2, wherein
the side sill frame includes:
a first side sill frame to which one side of the reinforcing frame is bonded; and
a second side sill frame to which the other side of the reinforcing frame is bonded, and bonded to the first side sill frame,
wherein the first plane portion and the second plane portion are disposed to face a junction of the first side sill frame and the second side sill frame.

5. The side sill of claim 4, wherein at least one of the first plane portion and the second plane portion includes an uneven portion.

6. The side sill of any one of claims 2 to 5, wherein a length of the first plane portion and the second plane portion in the longitudinal direction of the side sill frame is any one value of 40 mm or more and 70 mm or less.

7. The side sill of any one of claims 2 to 5, wherein an angle formed by an extension line of the first plane portion and the inclined portion and an angle formed by the extension line of the second plane portion and the inclined portion are any one value of 45° or more and 75° or less.

8. The side sill of claim 1, wherein
the unit section includes:
a third plane portion disposed to be parallel to the longitudinal direction of the side sill frame;
a third inclined portion connected to the third plane portion and disposed to be inclined upwardly; and
a fourth inclined portion connected to the third inclined portion and disposed to be inclined downwardly.

9. The side sill of claim 1, wherein
the unit section includes:
a fourth plane portion disposed to be parallel to the longitudinal direction of the side sill frame;
a fifth inclined portion connected to the fourth plane portion and disposed to be inclined downwardly; and
a sixth inclined portion connected to the fifth inclined portion and disposed to be inclined upwardly.

10. The side sill of claim 1, wherein
the unit section includes:
a seventh inclined portion disposed to be inclined upwardly; and
an eighth inclined portion connected to the seventh inclined portion and disposed to be inclined downwardly.

11. The side sill of claim 10, wherein the seventh inclined portion and the eighth inclined portion have a flat plate shape.

12. The side sill of claim 10, wherein the seventh inclined portion and the eighth inclined portion have a curved plate shape.

13. The side sill of claim 1, wherein
the unit section includes:
a first unit section disposed in an upper portion of the side sill frame in a height direction; and
a second unit section disposed below the first unit section,
wherein the first unit section includes:
a fifth plane portion disposed to be parallel to the longitudinal direction of the side sill frame;
a ninth inclined portion connected to the fifth plane portion and disposed to be inclined upwardly; and
a tenth inclined portion connected to the ninth inclined portion and disposed to be inclined downwardly, and
the second unit section includes:
a sixth plane portion disposed to be parallel to the longitudinal direction of the side sill frame;
an eleventh inclined portion connected to the sixth plane portion and disposed to be inclined downwardly; and
a twelfth inclined portion connected to the eleventh inclined portion and disposed to be inclined upwardly.

14. The side sill of claim 13, wherein the fifth plane portion and the sixth plane portion are in contact with each other.

15. The side sill of claim 1, wherein
the unit section includes:
a first unit section disposed in an upper portion in the height direction; and
a second unit section disposed below the first unit section,
wherein the first unit section includes:
a seventh plane portion disposed to be parallel to the longitudinal direction of the side sill frame;
a thirteenth inclined portion connected to the seventh plane portion and disposed to be inclined upwardly;
an eighth plane portion connected to the thirteenth inclined portion and provided in a position lower than the seventh plane portion; and
a fourteenth inclined portion connected to the eighth plane portion and disposed to be inclined downwardly, and
the second unit section includes:
a ninth plane portion disposed to be parallel to the longitudinal direction of the side sill frame;
a fifteenth inclined portion connected to the ninth plane portion and disposed to be inclined downwardly;
a tenth plane portion connected to the fifteenth inclined portion and provided in a position lower than the ninth plane portion; and
a sixteenth inclined portion connected to the tenth plane portion and disposed to be inclined upwardly.

16. The side sill of claim 15, wherein the seventh plane portion and the ninth plane portion are disposed to be in contact with each other.

17. The side sill of claim 1, wherein
the unit section includes:
a first unit section disposed in an upper portion of the side sill frame in a height direction; and
a second unit section disposed below the first unit section,
wherein the first unit section includes:
a seventeenth inclined portion disposed to be inclined upwardly; and
an eighteenth inclined portion connected to the seventeenth inclined portion and disposed to be inclined downwardly, and
the second unit section includes:
a nineteenth inclined portion disposed to be inclined downwardly; and
a twentieth inclined portion connected to the nineteenth inclined portion and disposed to be inclined upwardly.

18. The side sill of any one of claims 1 to 5 and 8 to 16, wherein at least one of the side sill frame and the reinforcing frame is formed of steel.

19. The side sill of any one of claims 1 to 5 and 8 to 17, wherein the reinforcing frame is formed of single sheet steel.

20. The side sill of any one of claims 1 to 5 and 8 to 17, wherein a thickness of the reinforcing frame is any one of 1.8 mm or more and 2.2 mm or less.

21. The side sill of any one of claims 1 to 5 and 8 to 17, wherein the reinforcing frame has a tensile strength of 1180 MPa or more and a yield strength of 850 MPa or more and 1060 MPa or less.
